# EUROPEAN PATENT APPLICATION

(11) **EP 4 750 158 A1**
(43) Date of publication of application: **27.05.2026**
(21) Application number: 24843244.5
(22) Date of filing: 19.04.2024
(51) Int. Cl.: H04W 48/06, H04W 48/18, H04W 76/18, H04W 76/30, H04W 84/04

(54) **APPARATUS AND METHOD FOR CONTROLLING NETWORK CONGESTION IN WIRELESS COMMUNICATION SYSTEM**

(30) Priority: 19.07.2023 US 202363527586 P
(71) Applicant: LG Electronics Inc., Yeongdeungpo-gu Seoul 07336 (KR)
(72) Inventor: KIM, Sunhee, Seoul 06772 (KR); KIM, Hyunsook, Seoul 06772 (KR)
(74) Representative: Plasseraud IP
(86) International application number: PCT/KR2024/005316
(87) International publication number: WO 2025/018521

(57) **Abstract**

The objective of the present disclosure is to control network congestion in a wireless communication system, and this method performed by a network comprises the steps of: activating a congestion control function; receiving a request message from a terminal; and transmitting, to the terminal, a message including a rejection reason for the request message, wherein the rejection reason can indicate resource insufficiency for single network slice selection assistance information (LADN S-NSSAI) and a data network name (LADN DNN) within a local area data network (LADN) service area.

## Description

### TECHNICAL FIELD

The present description relates to a wireless communication system, and more specifically, to a device and method for controlling network congestion in a wireless communication system.

### BACKGROUND ART

Wireless access systems are being widely deployed to provide various types of communication services such as voice and data. Generally, a wireless access system is a multiple access system that can support communication with multiple users by sharing available system resources (bandwidth, transmission power, etc.). Examples of multiple access systems include Code Division Multiple Access (CDMA) systems, Frequency Division Multiple Access (FDMA) systems, Time Division Multiple Access (TDMA) systems, Orthogonal Frequency Division Multiple Access (OFDMA) systems, Single Carrier Frequency Division Multiple Access (SC-FDMA) systems, and the like.

In particular, as many communication devices require large communication capacity, enhanced Mobile Broadband (eMBB) communication technology that is improved compared to existing Radio Access Technology (RAT) has been proposed. In addition, communication systems considering not only massive Machine Type Communications (mMTC) that connects multiple devices and objects to provide various services anytime and anywhere, but also reliability and latency sensitive services/User Equipment (UE) have been proposed. Various technical configurations for this purpose are being proposed.

### DISCLOSURE

### TECHNICAL PROBLEM

The present disclosure relates to a device and method for controlling network congestion in a wireless communication system.

The present disclosure relates to a device and method for controlling overload and/or congestion of a group of wireless devices in a wireless communication system.

The present disclosure relates to a device and method for controlling network congestion based on a local area data network (LDAN) service area in a wireless communication system.

The present disclosure relates to a device and method for indicating resource insufficiency for single network slice selection assistance information (LADN S-NSSAI) and LADN data network name (DNN) within an LDAN service area in a wireless communication system.

The present disclosure relates to a device and method for preventing network access of a group of wireless devices based on a back-off timer in a wireless communication system.

The technical objectives to be achieved by the present disclosure are not limited to the matters mentioned above, and other technical problems not mentioned may be considered by those skilled in the art to which the technical configuration of the present disclosure is applied from the embodiments of the present disclosure to be described below.

### TECHNICAL SOLUTION

In an embodiment of the present disclosure, a method performed by a network in wireless communication system comprises activating a congestion control function, receiving a request message from a wireless device, and transmitting a message including a reject cause for the request message to the wireless device, wherein the reject cause indicates insufficient resources for a local area data network (LADN) single network slice selection assistance information (S-NSSAI) and an LADN data network name (DNN) within an LADN service area.

In an embodiment of the present disclosure, a method performed by a wireless device in a wireless communication system comprises transmitting a request message to a network, receiving a message including a reject cause for the request message from the network, and controlling a retransmission of the request message based on whether the message including the reject cause includes a back-off timer value, wherein the reject cause indicates insufficient resources for a local area data network (LADN) single network slice selection assistance information (S-NSSAI) and an LADN DNN within an LADN service area.

In an embodiment of the present disclosure, a network device in a wireless communication system comprises a transceiver, and a processor connected to the transceiver, wherein the processor controls to activate a congestion control function, receive a request message from a wireless device, and transmit a message including a reject cause for the request message to the wireless device, and wherein the reject cause indicates insufficient resources for a local area data network (LADN) single network slice selection assistance information (S-NSSAI) and an LADN DNN within an LADN service area.

In an embodiment of the present disclosure, a wireless device in a wireless communication system comprises a transceiver, and a processor connected to the transceiver, wherein the processor controls to transmit a request message to a network, receive a message including a reject cause for the request message from the network, and control a retransmission of the request message based on whether the message including the reject cause includes a back-off timer value, and wherein the reject cause indicates insufficient resources for a local area data network (LADN) single network slice selection assistance information (S-NSSAI) and an LADN DNN within an LADN service area.

In an embodiment of the present disclosure, a communication device comprising at least one processor, and at least one computer memory connected to the at least one processor and storing instructions that, based on being executed by the at least one processor, perform operations comprising transmitting a request message to a network, receiving a message including a reject cause for the request message from the network, and controlling a retransmission of the request message based on whether the message including the reject cause includes a back-off timer value, wherein the reject cause indicates insufficient resources for a local area data network (LADN) single network slice selection assistance information (S-NSSAI) and an LADN DNN within an LADN service area.

In an embodiment of the present disclosure, a non-transitory computer-readable medium storing at least one instruction, wherein the non-transitory computer-readable medium comprises the at least one instruction executable by a processor, wherein the at least one instruction cause a device to transmit a request message to a network, receive a message including a reject cause for the request message from the network, and control a retransmission of the request message based on whether the message including the reject cause includes a back-off timer value, and wherein the reject cause indicates insufficient resources for a local area data network (LADN) single network slice selection assistance information (S-NSSAI) and an LADN DNN within an LADN service area.

### ADVANTAGEOUS EFFECTS

Embodiments based on the present disclosure may have the following effects:

The present disclosure can perform overload and congestion control for a group of wireless devices in a wireless communication system.

The effects obtainable from the embodiments of the present disclosure are not limited to the effects mentioned above, and other effects not mentioned can be clearly derived and understood by those skilled in the art to which the technical configuration of the present disclosure is applied from the description of the embodiments of the present disclosure below. That is, unintended effects resulting from implementing the configuration described in the present disclosure may also be derived by those skilled in the art from the embodiments of the present disclosure.

### BRIEF DESCRIPTION OF THE DRAWINGS

The drawings attached below are provided to help understand the present disclosure, and may provide embodiments of the present disclosure together with detailed description. However, the technical features of the present disclosure are not limited to specific drawings, and the features disclosed in each drawing may be combined with each other to constitute a new embodiment. Reference numerals in each drawing may indicate structural elements.
FIG. 1 illustrates an example of a communication system applied to the present disclosure.
FIG. 2 illustrates an example of a UE applicable to the present disclosure.
FIG. 3 illustrates an example of functional separation between NG-RAN and 5th generation core (5GC) applicable to the present disclosure.
FIG. 4 illustrates an example of general architecture of a 5th generation (5G) system applicable to the present disclosure.
FIG. 5 illustrates an example of a congestion control procedure according to an embodiment of the present disclosure.
FIG. 6 illustrates an example of a congestion control procedure of an AMF according to an embodiment of the present disclosure.
FIG. 7 illustrates an example of a congestion control procedure of an SMF according to an embodiment of the present disclosure.
FIG. 8 illustrates an example of a congestion control procedure of an SMF according to an embodiment of the present disclosure.
FIG. 9 illustrates an example of a request procedure of a wireless device according to an embodiment of the present disclosure.

### MODE FOR INVENTION

The following embodiments are combinations of components and features of the present disclosure in predetermined forms. Each component or feature may be considered optional unless explicitly stated otherwise. Each component or feature may be implemented without being combined with other components or features. Also, an embodiment of the present disclosure may be configured by combining some components and/or features. The order of operations described in the embodiments of the present disclosure may be changed. Some configurations or features of one embodiment may be included in another embodiment, or may be replaced with corresponding configurations or features of another embodiment.

In the description of the drawings, procedures or steps that may obscure the gist of the present disclosure are not described, and procedures or steps that can be understood at the level of those skilled in the art are also not described.

Throughout the specification, when a part is said to "comprise" or "include" a component, this means that it may further include other components rather than excluding other components unless specifically stated to the contrary. Also, terms such as "unit", "device", and "module" described in the specification mean a unit that processes at least one function or operation, which may be implemented by hardware, software, or a combination of hardware and software. Also, "a" or "an", "one", "the" and similar related words may be used in a sense including both singular and plural in the context of describing the present disclosure (particularly in the context of the claims below) unless otherwise indicated herein or clearly contradicted by context.

In this specification, the embodiments of the present disclosure have been described focusing on the data transmission and reception relationship between a base station and a mobile station. Here, the base station has meaning as a terminal node of a network that directly communicates with a mobile station. Specific operations described as being performed by a base station in this document may in some cases be performed by an upper node of the base station.

That is, various operations performed for communication with a mobile station in a network consisting of multiple network nodes including a base station may be performed by the base station or other network nodes other than the base station. At this time, 'base station' may be replaced by terms such as fixed station, Node B, eNB (eNode B), gNB (gNode B), ng-eNB, advanced base station (ABS), or access point.

Also, in the embodiments of the present disclosure, a terminal may be replaced by terms such as user equipment (UE), mobile station (MS), subscriber station (SS), mobile subscriber station (MSS), mobile terminal, or advanced mobile station (AMS).

Also, a transmitting end refers to a fixed and/or mobile node that provides data service or voice service, and a receiving end refers to a fixed and/or mobile node that receives data service or voice service. Therefore, in the case of uplink, a mobile station may be a transmitting end and a base station may be a receiving end. Similarly, in the case of downlink, a mobile station may be a receiving end and a base station may be a transmitting end.

The embodiments of the present disclosure may be supported by standard documents disclosed in at least one of wireless access systems including IEEE 802.xx system, 3rd Generation Partnership Project (3GPP) system, 3GPP Long Term Evolution (LTE) system, 3GPP 5th generation (5G) New Radio (NR) system, and 3GPP2 system, and in particular, the embodiments of the present disclosure may be supported by 3GPP technical specification (TS) 38.211, 3GPP TS 38.212, 3GPP TS 38.213, 3GPP TS 38.321, and 3GPP TS 38.331 documents.

Also, the embodiments of the present disclosure may be applied to other wireless access systems and are not limited to the above-described systems. For example, they may be applicable to systems applied after the 3GPP 5G NR system and are not limited to a specific system.

That is, obvious steps or parts not described among the embodiments of the present disclosure may be described with reference to the above documents. Also, all terms disclosed in this document may be described by the above standard documents.

Hereinafter, preferred embodiments according to the present disclosure will be described in detail with reference to the accompanying drawings. The detailed description to be disclosed below together with the accompanying drawings is intended to describe exemplary embodiments of the present disclosure and is not intended to represent the only embodiment in which the technical configuration of the present disclosure may be implemented.

Also, specific terms used in the embodiments of the present disclosure are provided to help understanding of the present disclosure, and the use of such specific terms may be changed to other forms without departing from the technical spirit of the present disclosure.

The following technology may be applied to various wireless access systems such as code division multiple access (CDMA), frequency division multiple access (FDMA), time division multiple access (TDMA), orthogonal frequency division multiple access (OFDMA), single carrier frequency division multiple access (SC-FDMA), and the like.

For clarity of description below, the description is based on a 3GPP communication system (e.g., LTE, NR, etc.), but the technical spirit of the present disclosure is not limited thereto. LTE may refer to technology after 3GPP TS 36.xxx Release 8. In detail, LTE technology after 3GPP TS 36.xxx Release 10 may be referred to as LTE-A, and LTE technology after 3GPP TS 36.xxx Release 13 may be referred to as LTE-A pro. 3GPP NR may refer to technology after TS 38.xxx Release 15. 3GPP 6G may refer to technology after TS Release 17 and/or Release 18. "xxx" means a standard document detail number. LTE/NR/6G may be collectively referred to as a 3GPP system.

Regarding background technology, terms, abbreviations, etc., used in the present disclosure, reference may be made to matters described in standard documents published before the present disclosure. For example, 36.xxx and 38.xxx standard documents may be referred to.

For terms, abbreviations, and other background technologies that may be used in this document, reference may be made to the following standard document descriptions published before this document. In particular, for LTE/ Evolved Packet System (EPS) related terms, abbreviations, and other background technologies, reference may be made to 36.xxx series, 23.xxx series, and 24.xxx series, and for new radio (NR)/5G system (5GS) related terms, abbreviations, and other background technologies, reference may be made to 38.xxx series, 23.xxx series, and 24.xxx series.

Hereinafter, this specification is described based on the terms defined as above.

The three main requirement areas of 5G include (1) Enhanced Mobile Broadband (eMBB) area, (2) massive Machine Type Communication (mMTC) area, and (3) Ultra-reliable and Low Latency Communications (URLLC) area.

Some use cases may require multiple areas for optimization, and other use cases may focus only on one Key Performance Indicator (KPI). 5G supports these various use cases in a flexible and reliable way.

### Communication System Applicable to the Present Disclosure

Although not limited thereto, various descriptions, functions, procedures, proposals, methods and/or operational flowcharts of the present disclosure disclosed in this document may be applied to various fields requiring wireless communication/connection (e.g., 5G) between devices.

Hereinafter, more specific examples are illustrated with reference to drawings. In the following drawings/descriptions, the same reference numerals may illustrate the same or corresponding hardware blocks, software blocks, or functional blocks unless described otherwise.

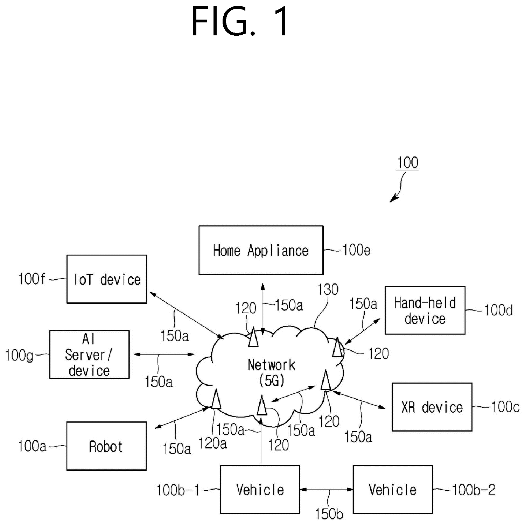

FIG. 1 illustrates an example of a communication system applied to the present disclosure.

Referring to FIG. 1, a communication system 100 applied to the present disclosure includes wireless devices, a base station, and a network. Here, a wireless device means a device that performs communication using wireless access technology (e.g., 5G NR, LTE), and may be referred to as a communication/wireless/5G device. Although not limited thereto, the wireless device may include a robot 100a, vehicles 100b-1 and 100b-2, an extended reality (XR) device 100c, a hand-held device 100d, a home appliance 100e, an Internet of Things (IoT) device 100f, and an artificial intelligence (AI) device/server 100g. For example, the vehicle may include a vehicle equipped with wireless communication function, an autonomous vehicle, a vehicle capable of performing vehicle-to-vehicle communication, etc. Here, the vehicles 100b-1 and 100b-2 may include an unmanned aerial vehicle (UAV) (e.g., drone). The XR device 100c includes augmented reality (AR)/virtual reality (VR)/mixed reality (MR) devices, and may be implemented in the form of a head-mounted device (HMD), a head-up display (HUD) installed in a vehicle, television, smartphone, computer, wearable device, home appliance, digital signage, vehicle, robot, etc. The hand-held device 100d may include a smartphone, smart pad, wearable device (e.g., smartwatch, smart glasses), computer (e.g., laptop, etc.), etc. The home appliance 100e may include TV, refrigerator, washing machine, etc. The IoT device 100f may include a sensor, smart meter, etc. For example, the base station 120 and network 130 may also be implemented as wireless devices, and a specific wireless device 120a may operate as a base station/network node for other wireless devices.

The wireless devices 100a to 100f may be connected to the network 130 through the base station 120. AI technology may be applied to the wireless devices 100a to 100f, and the wireless devices 100a to 100f may be connected to an AI server 100g through the network 130. The network 130 may be configured using a 3G network, 4G (e.g., LTE) network, or 5G (e.g., NR) network, etc. The wireless devices 100a to 100f may communicate with each other through the base station 120/network 130, but may also communicate directly (e.g., sidelink communication) without going through the base station 120/network 130. For example, the vehicles 100b-1 and 100b-2 may perform direct communication (e.g., vehicle to vehicle (V2V)/vehicle to everything (V2X) communication). Also, the IoT device 100f (e.g., sensor) may communicate directly with other IoT devices (e.g., sensor) or other wireless devices 100a to 100f.

Wireless communication/connection 150a, 150b, and 150c may be established between the wireless devices 100a to 100f/base station 120 and between base stations 120/120. Here, wireless communication/connection may be achieved through various wireless access technologies (e.g., 5G NR) such as uplink/downlink communication 150a, sidelink communication 150b (or D2D communication), and inter-base station communication 150c (e.g., relay, integrated access backhaul (IAB)). Through wireless communication/connection 150a, 150b, and 150c, wireless devices and base stations/wireless devices, and base stations and base stations may transmit/receive wireless signals to/from each other. For example, wireless communication/connection 150a, 150b, and 150c may transmit/receive signals through various physical channels. To this end, based on various proposals of the present disclosure, at least some of various configuration information setting processes for wireless signal transmission/reception, various signal processing processes (e.g., channel encoding/decoding, modulation/demodulation, resource mapping/demapping, etc.), resource allocation processes, etc., may be performed.

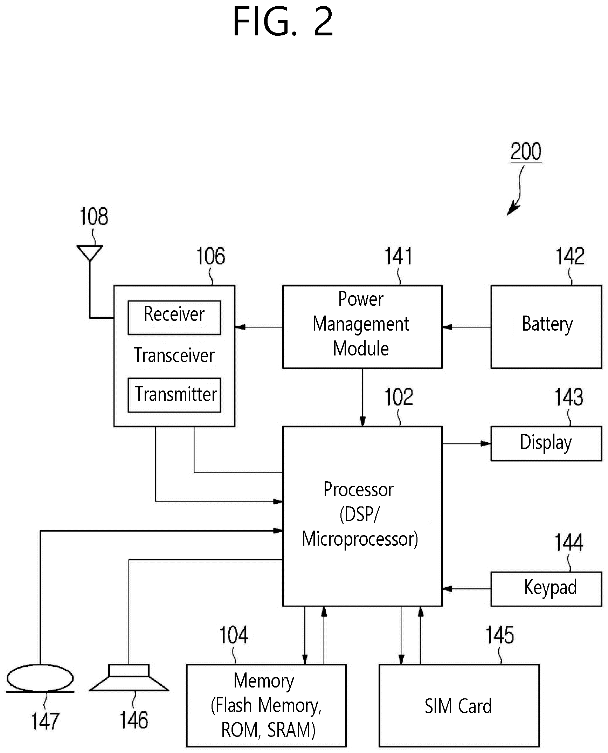

FIG. 2 illustrates an example of a UE applicable to the present disclosure.

Referring to FIG. 2, the UE 200 may include a processor 202, memory 204, transceiver 206, one or more antennas 208, power management module 241, battery 242, display 243, keypad 244, Subscriber Identification Module (SIM) card 245, speaker 246, and microphone 247.

The processor 202 may be configured to implement the descriptions, functions, procedures, proposals, methods and/or operational flowcharts disclosed herein. The processor 202 may be configured to control one or more other components of the UE 200 to implement the descriptions, functions, procedures, proposals, methods and/or operational flowcharts disclosed herein. Layers of wireless interface protocol may be implemented in the processor 202. The processor 202 may include ASIC, other chipset, logic circuit and/or data processing device. The processor 202 may be an application processor. The processor 202 may include at least one of DSP, Central Processing Unit (CPU), Graphics Processing Unit (GPU), and modem (modulator and demodulator).

The memory 204 is operably coupled with the processor 202 and may store various information for operating the processor 202. The memory 204 may include ROM, RAM, flash memory, memory card, storage medium and/or other storage device. When implementation is implemented in software, the techniques described herein may be implemented using modules (e.g., procedures, functions, etc.) that perform the descriptions, functions, procedures, proposals, methods and/or operational flowcharts disclosed herein. The modules may be stored in memory 204 and executed by the processor 202. The memory 204 may be implemented within the processor 202 or external to the processor 202, in which case it may be communicatively coupled with the processor 202 through various methods known in the art.

The transceiver 206 is operably coupled with the processor 202 and may transmit and/or receive wireless signals. The transceiver 206 may include a transmitter and a receiver. The transceiver 206 may include baseband circuitry for processing radio frequency signals. The transceiver 206 may control one or more antennas 208 to transmit and/or receive wireless signals.

The power management module 241 may manage power for the processor 202 and/or transceiver 206. The battery 242 may supply power to the power management module 241.

The display 243 may output results processed by the processor 202. The keypad 244 may receive input for use by the processor 202. The keypad 244 may be displayed on the display 243.

The SIM card 245 is an integrated circuit for securely storing International Mobile Subscriber Identity (IMSI) and related keys, and may be used to identify and authenticate subscribers in mobile phone devices such as mobile phones or computers. Also, contact information may be stored in many SIM cards.

The speaker 246 may output sound-related results processed by the processor 202. The microphone 247 may receive sound-related input for use by the processor 202.

In implementation of this specification, the UE may operate as a transmitting device in uplink and as a receiving device in downlink. In implementation of this specification, the base station may operate as a receiving device in UL and as a transmitting device in DL. In this specification, the base station may be called Node B, eNode B (eNB), gNB, and may not be limited to a specific form.

Also, for example, the UE may be implemented in various forms according to use cases/services. The UE may be configured by various components, devices/parts and/or modules. For example, each UE may include a communication device, control device, memory device, and additional components. The communication device may include communication circuitry and a transceiver. For example, the communication circuitry may include one or more processors and/or one or more memories. For example, the transceiver may include one or more transceivers and/or one or more antennas. The control device is electrically connected to the communication device, memory device, and additional components, and may control the overall operation of each UE. For example, the control device may control the electrical/mechanical operation of each UE based on programs/codes/instructions/information stored in the memory device. The control device may transmit information stored in the memory device to the outside (e.g., other communication devices) through the communication device via wireless/wired interface, or store information received from the outside (e.g., other communication devices) through the communication device via wireless/wired interface in the memory device.

The additional components may be configured variously according to the type of UE. For example, the additional components may include at least one of power device/battery, input/output (I/O) device (e.g., audio I/O port, video I/O port), driving device, and computing device. Also, the UE may be implemented in the form of, but not limited to, robot (100a in FIG. 1), vehicle (100b-1 and 100b-2 in FIG. 1), XR device (100c in FIG. 1), portable device (100d in FIG. 1), home appliance (100e in FIG. 1), IoT device (100f in FIG. 1), digital broadcasting terminal, hologram device, public safety device, MTC device, medical device, fintech device (or financial device), security device, climate/environment device, AI server/device (100g in FIG. 1), base station (120 in FIG. 1), network node. The UE may be used in mobile or fixed locations according to use cases/services.

All of the various components, devices/parts and/or modules of the UE may be connected to each other through wired interface, or at least some may be wirelessly connected through the communication device. Also, each component, device/part and/or module of the UE may further include one or more elements. For example, the control device may be configured by one or more processor sets. For example, the control device may be configured by a set of communication control processor, Application Processor (AP), Electronic Control Unit (ECU), graphics processing unit, and memory control processor. As another example, the memory device may be configured by RAM, Dynamic RAM (DRAM), ROM, flash memory, volatile memory, non-volatile memory and/or combinations thereof.

### 5G System Architecture Applicable to the Present Disclosure

The 5G system is an advanced technology from 4th generation LTE mobile communication technology that supports new Radio Access Technology (RAT), extended LTE (eLTE) as an extended technology of Long Term Evolution (LTE), non-3GPP (e.g., WLAN) access, etc., through evolution or clean-state structure of existing mobile communication network structure.

The 5G system is defined service-based, and interactions between Network Functions (NFs) within the architecture for the 5G system can be represented in two ways as follows:
- Reference point representation: Represents interactions between NF services within NFs described by point-to-point reference points (e.g., N11) between two NFs (e.g., AMF and SMF).
- Service-based representation: Network functions (e.g., AMF) within the Control Plane (CP) allow other authorized network functions to access their services. This representation also includes point-to-point reference points when necessary.

5G Core (5GC) may include various components, among which access and mobility management function (AMF), session management function (SMF), policy control function (PCF), user plane function (UPF), application function (AF), unified data management (UDM), and non-3GPP interworking function (N3IWF) are included.

The UE is connected to a data network through UPF via next generation radio access network (NG-RAN) including gNB. The UE may receive data service through untrusted non-3GPP access, such as wireless local area network (WLAN). To connect non-3GPP access to the core network, N3IWF may be deployed.

N3IWF performs the function of managing interworking between non-3GPP access and the 5G system. When the UE is connected to non-3GPP access (e.g., WiFi referred to as IEEE 802.11), the UE may be connected to the 5G system through N3IWF. N3IWF performs control signaling with AMF and is connected to UPF through N3 interface for data transmission.

AMF may manage access and mobility in the 5G system. AMF may perform the function of managing non-access stratum (NAS) security. AMF may perform the function of handling mobility in idle state.

UPF performs the function of a gateway for transmitting and receiving user data. The UPF node may perform all or part of the user plane functions of serving gateway (S-GW) and packet data network gateway (P-GW) of 4th generation mobile communication.

UPF operates as a boundary point between next generation RAN (NG-RAN) and core network, and is an element that maintains data path between gNB and SMF. Also, when the UE moves across an area served by gNB, UPF performs the role of mobility anchor point. UPF may perform the function of handling PDU. For mobility within NG-RAN (e.g., NG-RAN defined after 3GPP Release-15), UPF may route packets. Also, UPF may function as an anchor point for mobility with other 3GPP networks (e.g., RAN defined before 3GPP Release-15), for example, UMTS (universal mobile telecommunications system) terrestrial radio access network (UTRAN), evolved-UTRAN (E-UTRAN), or GSM (global system for mobile communication)/EDGE (enhanced data rates for global evolution) radio access network (GERAN). UPF may correspond to a termination point of data interface toward data network.

PCF is a node that controls operator policy. AF is a server for providing various services to the UE. UDM is a server that manages subscriber information, like home subscriber server (HSS) of 4th generation mobile communication. UDM 460 stores and manages subscriber information in unified data repository (UDR).

SMF may perform the function of allocating Internet protocol (IP) address of the UE. And SMF may control protocol data unit (PDU) session.

For convenience of description below, reference numerals for AMF, SMF, PCF, UPF, AF, UDM, N3IWF, gNB, or UE may be omitted, and may operate with reference to matters described in standard documents published before this document.

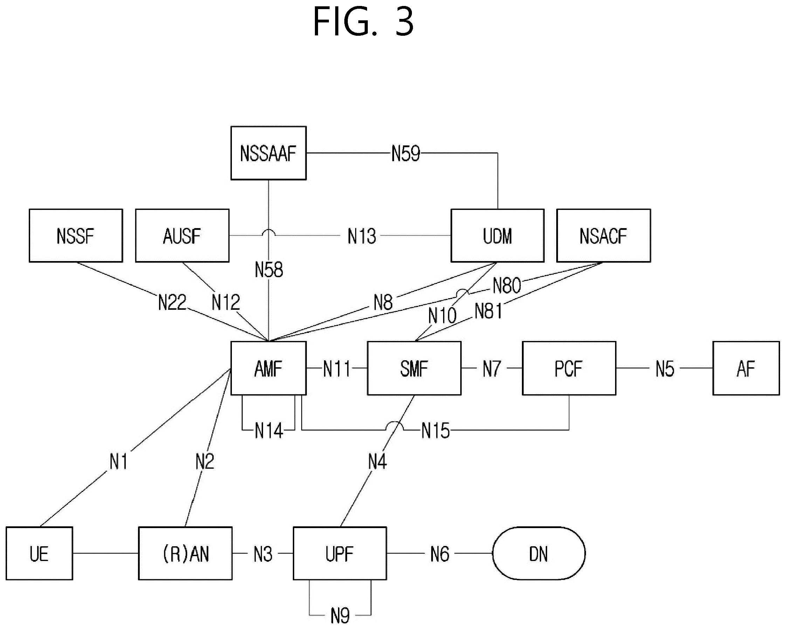

FIG. 3 illustrates an example of functional separation between NG-RAN and 5th generation core (5GC) applicable to the present disclosure.

Referring to FIG. 3, the UE is connected to a data network (DN) through next generation RAN. The control plane function (CPF) node performs all or part of the functions of mobility management entity (MME) of 4th generation mobile communication, and all or part of the control plane functions of serving gateway (S-GW) and PDN gateway (P-GW). The CPF node includes AMF and SMF.

The UPF node performs the function of a gateway through which user data is transmitted and received.

Authentication server function (AUSF) authenticates and manages the UE. Network Slice Selection Function (NSSF) is a node for network slicing as described below.

Network exposure function (NEF) provides a mechanism to securely expose services and functions of 5G core.

The reference points shown in FIG. 3 are as follows. N1 represents a reference point between UE and AMF. N2 represents a reference point between (R)AN and AMF. N3 represents a reference point between (R)AN and UPF. N4 represents a reference point between SMF and UPF. N5 represents a reference point between PCF and AF. N6 represents a reference point between UPF and DN. N7 represents a reference point between SMF and PCF. N8 represents a reference point between UDM and AMF. N9 represents a reference point between UPFs. N10 represents a reference point between UDM and SMF. N11 represents a reference point between AMF and SMF. N12 represents a reference point between AMF and AUSF. N13 represents a reference point between UDM and AUSF. N14 represents a reference point between AMFs. N15 represents a reference point between PCF and AMF in non-roaming scenario, and a reference point between AMF and PCF of visited network in roaming scenario. N16 represents a reference point between SMFs. N22 represents a reference point between AMF and NSSF. N30 represents a reference point between PCF and NEF. N33 may represent a reference point between AF and NEF, and the above-mentioned entities and interfaces may be configured with reference to matters described in standard documents published before this document. N58 represents a reference point between AMF and NSSAAF. N59 represents a reference point between UDM and NSSAAF. N80 represents a reference point between AMF and NSACF. N81 represents a reference point between SMF and NSACF.

The wireless interface protocol is based on 3GPP radio access network specifications. The wireless interface protocol consists horizontally of physical layer, data link layer, and network layer, and is vertically divided into user plane for data information transmission and control plane for control signal (signaling) transmission.

Protocol layers can be divided into L1 (layer-1), L2 (layer-2), and L3 (layer-3) based on the lower three layers of the open system interconnection (OSI) reference model widely known in communication systems.

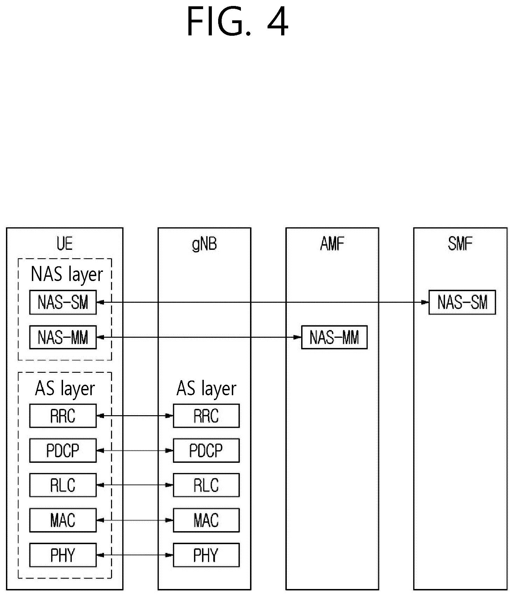

Hereinafter, the present disclosure describes each layer of wireless protocol. FIG. 4 illustrates an example of general architecture of a 5th generation (5G) system applicable to the present disclosure.

Referring to FIG. 4, the access stratum (AS) layer may include physical (PHY) layer, medium access control layer, radio link control (RLC) layer, packet data convergence protocol (PDCP) layer, and radio resource control (RRC) layer, and operations based on each layer may operate with reference to matters described in standard documents published before this document.

### Specific Embodiments of the Present Disclosure

The present disclosure relates to a device and method for controlling network congestion in a wireless communication system. Specifically, the present disclosure relates to a device and method for preventing a wireless device from retransmitting a request message for a period of time corresponding to a back-off timer value, by transmitting a reject cause for the request and the back-off timer value to the wireless device when the network is unable to process the request of a group of wireless devices.

According to 3GPP 5G NAS protocol, a network has a 5G mobility management (5GMM) functions and a 5G session management (5GSM) functions. The 5GMM function is a function for managing general message transmission and reception between a wireless device and a network, as well as a mobility of the wireless device, while the 5GSM function is a function for handling PDU sessions between the wireless device and the network, i.e., between the wireless device and a SMF via an AMF. Accordingly, when the wireless device requests data transmission to the network, the network determines whether the request from the wireless device may be handled based on a plurality of specified conditions. At this time, the plurality of specified conditions includes at least one of wireless device subscription, network capacity, maximum data by guaranteed bit rate (GBR), maximum data rate per non-GBR, maximum data rate per single network slice selection assistance information (S-NSSAI), maximum data rate per data network name (DNN), or network policy. In addition, the network determines whether the request from the wireless device may be processed based on at least one of a PLMN network failure, Standalone Non-Public Network (SNPN) network failure, or a congestion control failure.

When processing the request from the wireless device is impossible, the network transmits to the wireless device a reject message including a request reject cause, that is, a cause for rejecting the request. Furthermore, the network may notify the wireless device of a back-off timer value, thereby preventing the wireless device from retransmitting the request to the network for a period corresponding to the back-off time. For example, when the network rejects a session establishment request (PDU session establishment request) of a wireless device, the network transmits a PDU session establishment reject message to the wireless device, which includes a reject cause indicating insufficient resources for a specific slice and DNN, or insufficient resources for a specific slice. At this time, the network transmits a back-off timer value to the wireless device, thereby controlling the wireless device not to transmit a PDU session establishment request message for data transmission to the network for a period corresponding to the back-off timer. This operation is performed in a registered PLMN, a subscribed SNPN, or all PLMNs and SNPNs.

Meanwhile, the 3GPP system aspects 2/core network and wireless devices 1 (SA2/CT1) working groups (WG) defined a method for efficiently managing groups by using the generic group management, exposure and communication enhancements (GMEC) work item description (WID). Specifically, the SA2 WG redefined the maximum group data rate and assigned the Policy Control Function (PCF) to monitor the data rate for each group and to control the data rate of each group so that the data rate does not exceed the maximum group data rate.

Furthermore, 3GPP TS23.501 defines control plane load control, congestion and overload control, and support exposure of DNN and S-NSSAI-specific group parameters. 3GPP TS 23.503 also defines group-related policy control and 5G VN group management, while 3GPP TS 24.501 defines handling of network rejection not due to congestion control.

However, procedures and methods for PDU session handling with respect to overload control, admission control, and congestion control at the NAS level have not been proposed. To apply data rates based on the maximum group data rate defined in SA2, new 5GMM and 5GSM procedures applicable to group of wireless devices are required. Furthermore, similar to general PDU session handling, methods for overload control and congestion control that operate for specific wireless devices based on specific groups are required.

In particular, for group management using the current GMEC WID, the network notifies wireless devices of the LADN service area and the LADN S-NSSAI and LADN DNN available within the LADN service area through extended LADN information. Therefore, new 5GMM and 5GSM procedures are required to control overload and congestion for each group of wireless devices in the network.

Therefore, the present disclosure proposes a technique for controlling congestion based on the LADN service area in a wireless communication system. Specifically, the present disclosure discloses a device and method for, when processing of the request of a group of wireless devices operating only in a specific LADN service area is impossible, preventing network access of the corresponding wireless device by transmitting a cause indicating that the request is rejected due to a lack of resources for the LADN S-NSSAI and LADN DNN and a back-off timer value to the wireless device in the network.

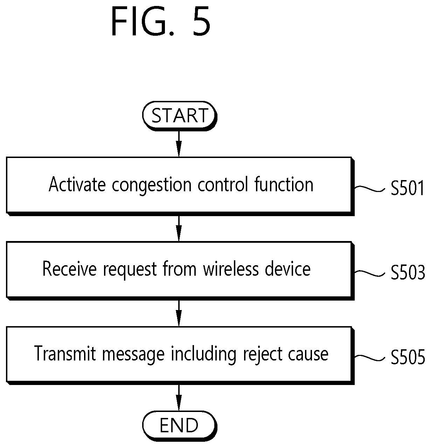

FIG. 5 illustrates an example of a congestion control procedure according to an embodiment of the present disclosure. FIG. 5 illustrates a method performed by a network. The network may include at least one network entity or network device performing network functions, such as AMF, SMF, NWDAF, or PCF.

Referring to FIG. 5, in step S501, the network activates a congestion control function. In other words, if the network cannot process a request from a wireless device operating only in a specific location based on a group, the network activates the LADN service area-based congestion control function. According to an embodiment, the network may determine whether processing the request from the wireless device is possible based on resource information regarding the LADN S-NSSAI and LADN DNN within the LADN service area.

In step S503, the network receives the request from the wireless device. In other words, the network may receive the request from the wireless device while the congestion control function based on the LADN service area is activated. The request from the wireless device may include a request message requiring network access or connection. For example, the request message may include at least one of a PDU session establishment request message, a PDU session modification request message, or a UL NAS transport message related to the PDU session. The UL NAS transport message related to the PDU session may include at least one of the PDU session establishment request message or a UL NAS transport message including the PDU session modification request message.

In step S505, the network transmits a message including a reject cause. In other words, if a request from the wireless device is received while the congestion control function based on the LADN service area is activated, the network determines that the network cannot process the request from the wireless device and transmits a message including a reject cause for the request to the wireless device. The reject cause for the request may be configured to indicate insufficient resources for the LADN S-NSSAI and the LADN DNN within the LADN service area. Additionally, the message including the reject cause may further include a back-off timer value for restricting network access of the wireless device. In an embodiment, the back-off timer value may be determined by operations, administration, and maintenance (OAM) or network local configuration, or by network training for the back-off timer value. In an embodiment, the back-off timer value may be determined based on various information from network entities such as the NWDAF, AMF, SMF, PCF, etc.

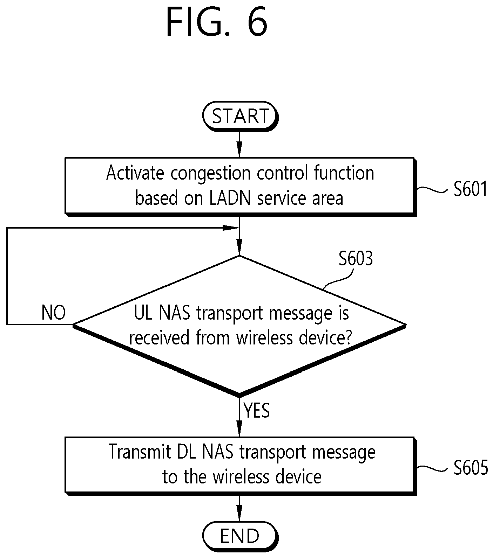

FIG. 6 illustrates an example of a congestion control procedure of an AMF according to an embodiment of the present disclosure. FIG. 6 illustrates a method performed by the AMF. In an embodiment, the operations of FIG.6 may be understood as specific examples of FIG. 5.

Referring to FIG. 6, in step S601, the AMF activates a congestion control function based on the LADN service area. In other words, the AMF may activate the LADN service area-based congestion control function based on the number of wireless devices requesting connection to the LADN service area, or based on an instruction or a request from another entity in the network. For example, if the number of wireless devices already connected to the LADN service area plus the number of wireless devices requesting connection to the LADN service area exceeds the maximum number of wireless devices that may connect to the LADN service area, the AMF may activate the congestion control function based on the LADN service area. For another example, the AMF may receive an instruction from the NWDAF or PCF to activate congestion control function based on the LADN service area for wireless devices corresponding to the LADN S-NSSAI and LADN DNN of the LADN service area, and may activate the LADN service area-based congestion control function based on the received instruction. The maximum number of wireless devices that may connect to the LADN service area may be determined based on the resources for the LADN S-NSSAI and LADN DNN within the LADN service area.

In step S603, the AMF determines whether a UL NAS transport message is received from the wireless device. For example, when the congestion control function based on the LADN service area is activated, the AMF determines whether a UL NAS transport message related to a PDU session is received from a wireless device operating in the LADN service area. The UL NAS transport message related to the PDU session may include a UL NAS transport message including a PDU session establishment request message or a PDU session modification request message.

If the UL NAS transport message is received from the wireless device, in step S605, the AMF transmits a DL NAS transport message to the wireless device. In other words, the AMF may not forward the PDU session-related message included in the UL NAS transport message to the SMF, but may instead transmit the DL NAS transport message to the wireless device in response to the UL NAS transport message. At this time, the DL NAS transport message may include at least one of a 5GMM reject cause indicating insufficient resources for the LADN S-NSSAI and LADN DNN within the LADN service area, or a corresponding back-off timer value, to activate a back-off timer of the wireless device.

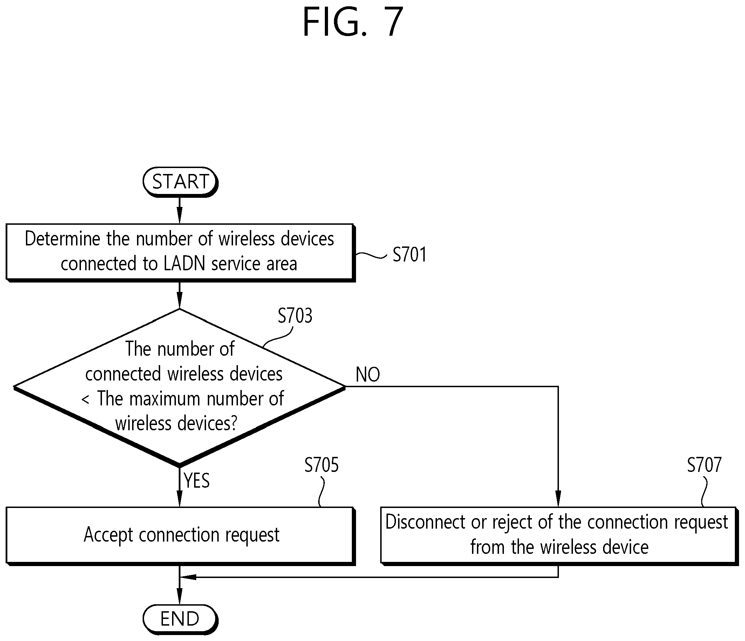

FIG. 7 illustrates an example of a congestion control procedure of an SMF according to an embodiment of the present disclosure. FIG. 7 illustrates a method performed by the SMF. According to an embodiment, the operations of FIG. 7 may be understood as specific examples of FIG. 5.

Referring to FIG. 7, in step S701, the SMF determines the number of wireless devices connected to the LADN service area. The SMF may obtain wireless device presence information within the LADN service area from the AMF and may count the number of wireless devices connected to the LADN service area based on the obtained wireless device presence information.

In step S703, the SMF determines whether the number of connected wireless devices is less than the maximum number of wireless devices. In other words, the SMF may determine whether the number of wireless devices connected to the LADN service area is less than the maximum number of wireless devices that may be connected to the LADN service area.

If the number of connected wireless devices is less than the maximum number of wireless devices, in step S705, the SMF accepts a connection request from the wireless device. In other words, if the number of wireless devices connected to the LADN service area is less than the maximum number of wireless devices that may be connected to the LADN service area, the SMF determines connection requests from other wireless devices can be processed in the LADN service area and may accept the connection request from the other wireless device. For example, the SMF may perform operations necessary for PDU session establishment or PDU session modification requested by the other wireless device. The other wireless device may be a wireless device that operates only in a specific LADN service area based on a group.

If the number of connected wireless devices is greater than or equal to the maximum number of wireless devices, in step S707, the SMF performs disconnection of the wireless device or rejection of the connection request of the wireless device. In other words, if the number of wireless devices connected to the LADN service area is greater than or equal to the maximum number of wireless devices that may be connected to the LADN service area, the SMF determines that processing of a connection request from another wireless device in the LADN service area is not possible, and may disconnect a wireless device already connected to the LADN service area or may reject the connection request from another wireless device. For example, the SMF may transmit a PDU session release command message to the already connected wireless device, or transmit a PDU session establishment reject message or a PDU session modification reject message to another wireless device. At this time, the SMF may transmit a 5GSM reject cause indicating insufficient resources for the LADN S-NSSAI and LADN DNN within the LADN service area and a back-off timer value therefor to the wireless device so that the wireless device starts a back-off timer. The 5GSM reject cause and the back-off timer value may be sent to the wireless device through the PDU session release command message, the PDU session establishment reject message, or the PDU session modification reject message.

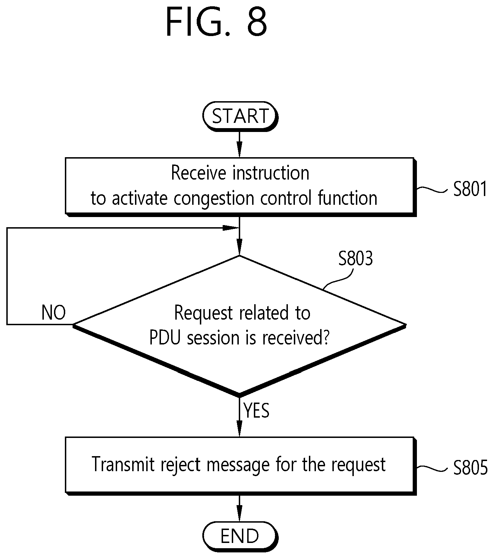

FIG. 8 illustrates an example of a congestion control procedure of an SMF according to an embodiment of the present disclosure. FIG. 8 illustrates a method performed by the SMF. According to an embodiment, the operations of FIG. 8 may be understood as specific examples of FIG. 5.

Referring to FIG. 8, in step S801, the SMF receives an instruction to activate a congestion control function. In other words, the SMF may receive an instruction to activate the congestion control function based on a LADN service area for a wireless device corresponding to LADN S-NSSAI and LADN DNN within the LADN service area from another network entity. Another network entity may be the NWDAF or the PCF. In this case, the SMF may activate the congestion control function based on the LADN service area according to the activation instruction from another network entity.

In step S803, the SMF determines whether a request related to a PDU session is received. In other words, the SMF determines whether a PDU session establishment request message or a PDU session modification request message is received from a wireless device operating within the LADN service area.

When the request related to a PDU session is received, in step S805, the SMF transmits a reject message for the request. Specifically, the SMF may transmit a PDU session establishment reject message or a PDU session modification reject message to a wireless device operating within the LADN service area. The PDU session establishment reject message or PDU session modification reject message may include a 5GSM reject cause and a corresponding back-off timer value to activate the back-off timer. The 5GSM reject cause may be configured to indicate insufficient resources for the LADN S-NSSAI and LADN DNN within the LADN service area.

As described above, a network such as the AMF or SMF may transmit the wireless device the reject cause for the request and back-off timer value. However, if the request received from the wireless device is related to an emergency service, the network does not transmit the back-off timer value to the wireless device. This is to prevent the congestion control function based on the LADN service area from being applied to requests related to emergency services, i.e., emergency PDU sessions. According to an embodiment, if the request type of the request message received from the wireless device is an initial emergency request type or an existing emergency PDU session type, the network may determine that the request message is related to an emergency service, and control the message including the reject cause not to include a back-off timer value.

Meanwhile, upon receiving the reject cause for the request and back-off timer value from the network, the wireless device starts a back-off timer corresponding to the LADN S-NSSAI, LADN DNN, and/or LADN service area and prevents request transmission to the network based on the back-off timer. For example, the wireless device does not initiate a PDU session establishment procedure or a PDU session modification procedure while the back-off timer is running or deactivated, and controls not to initiate an NAS transmission procedure for transmitting CIoT user data.

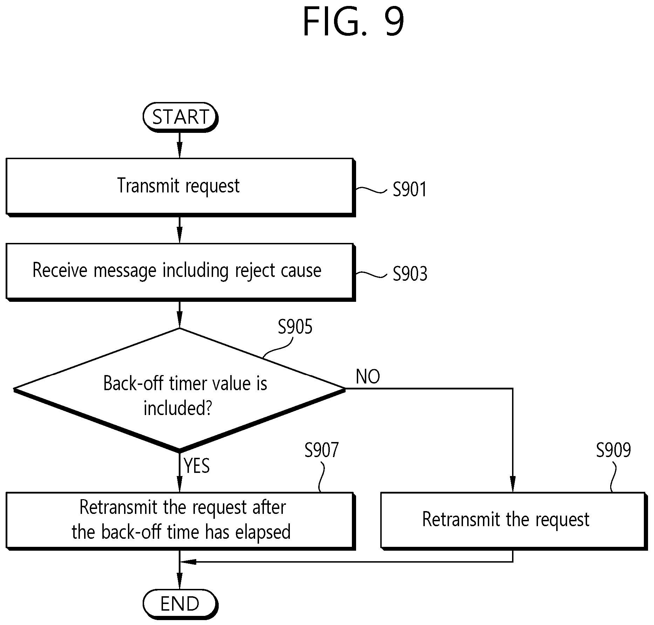

FIG. 9 illustrates an example of a request procedure of a wireless device according to an embodiment of the present disclosure. FIG. 9 illustrates a method performed by the wireless device.

Referring to FIG. 9, in step S901, the wireless device transmits a connection request to the network. In other words, the wireless device may transmit a request message requiring network access or connection to the network. The request message may include at least one of a PDU session establishment request message, a PDU session modification request message, or a UL NAS transport message related to the PDU session. The UL NAS transport message related to the PDU session may include at least one of a UL NAS transport message including a PDU session establishment request message or a UL NAS transport message including a PDU session modification request message.

In step S903, the wireless device receives a message including a reject cause. That is, the wireless device may receive a message from the network including a reject cause for the request. The message including the reject cause may include at least one of a DL NAS transport message, a PDU session establishment reject message, or a PDU session modification reject message. The reject cause for the request may indicate insufficient resources for the LADN S-NSSAI and LADN DNN within the LADN service area.

In step S905, the wireless device determines whether a back-off timer value is included. That is, the wireless device determines whether the reject message received from the network includes a back-off timer value.

If a back-off timer value is included, in step S907, the wireless device retransmits the request after the back-off time has elapsed. If the reject message includes a back-off timer value, the wireless device may start a back-off timer corresponding to the back-off timer value and control to prevent request messages requiring network access or connection from being sent to the network while the back-off timer is running, i.e., during the back-off time. Furthermore, the wireless device may retransmit the request message to the network when the back-off time has elapsed and the back-off timer expires.

If a back-off timer value is not included, in step S909, the wireless device retransmits the request. If the reject message does not include a back-off timer value, the wireless device may retransmit the request message to the network regardless of whether the reject cause is included in the reject message. In other words, even if the reject message includes a reject cause indicating insufficient resources for the LADN S-NSSAI and LADN DNN within the LADN service area, if the back-off timer value is not included, the wireless device may immediately transmit a PDU session establishment request or PDU session request message.

As described above, the wireless device does not transmit a request message requiring network access or connection to the network while the back-off timer is running. However, for emergency services, the wireless device may initiate a PDU session establishment procedure even while the back-off timer is running.

According to an embodiment, the wireless device may be turned off while the back-off timer is running. In this case, the back-off timer's time value is maintained. Therefore, when the wireless device is switched on, the back-off timer may be restarted and run for a period corresponding to the maintained time value.

For LADN service area-based congestion control as described above, the following may be defined:

In an embodiment, the contents defined in [Table 1] may be defined for a UL NAS transport message initiated by a wireless device.

**[Table 1]**

| | | |
|---|---|---|
| 5.4.5.2.4 UE-initiated NAS transport of messages not accepted by the network | | |
| Upon reception of an UL NAS TRANSPORT message, if the Payload container type IE is set to "N1 SM information" and the UE is not configured for high priority access in selected PLMN or SNPN, and: | | |
| | a) | if the Request type IE is set to "initial request", "existing PDU session", "modification request" and the PDU session is not an emergency PDU session; |
| | | ... |
| 4) LADN service area congestion control is activated for the corresponding LADN S-NSSAI and the LADN DNN S-NSSAI included in the UL NAS TRANSPORT message, e.g. configured by operation and maintenance, the AMF shall send back to the UE the 5GSM message which was not forwarded, a back-off timer value and 5GMM cause #xx "insufficient resources for LADN S-NSSAI and LADN DNN in the LADN service area" as specified in subclause 5.4.5.3.1 case f); | | |

As shown in [Table 1], when a UL NAS transport message is received, the AMF may activate the LADN service area-based congestion control function for the LADN S-NSSAI and LADN DNN S-SNNAI based on the request type of the UL NAS transport message. When the congestion control function based on the LADN service area is activated, the AMF may transmit to the wireless device a 5GMM reject cause indicating insufficient resources for the LADN S-NSSAI and LADN DNN within the LADN service area and a back-off timer value.

According to an embodiment, the contents in [Table 2] may be defined for a network-initiated UL NAS transport procedure.

**[Table 2]**

| | | | |
|---|---|---|---|
| 5.4.5.3.2 Network-initiated NAS transport procedure initiation | | | |
| In 5GMM-CONNECTED mode, the AMF initiates the NAS transport procedure by sending the DL NAS TRANSPORT message, as shown in figure 5.4.5.3.2.1. | | | |
| | | ... | |
| In case f) in subclause 5.4.5.3.1, i.e. upon sending a single uplink 5GSM message which was not forwarded due to congestion control, the AMF shall: | | | |
| | | a) | include the PDU session ID in the PDU session ID IE; |
| | | b) | set the Payload container type IE to "N1 SM information"; |
| | | c) | set the Payload container IE to the 5GSM message which was not forwarded; |
| | | d) | set the 5GMM cause IE to the 5GMM cause #22 "Congestion", the 5GMM cause #67 "insufficient resources for specific slice and DNN", the 5GMM cause #69 "insufficient resources for specific slice" or the 5GMM cause #xx "insufficient resources for LADN S-NSSAI and LADN DNN in the LADN service area"; and |
| | | e) | include the Back-off timer value IE. |
| | ... | | |
| For case 12) in subclause 5.4.5.3.1, i.e. upon sending a single uplink CIoT user data container which was not forwarded due to congestion control, the AMF shall: | | | |
| | | a) | include the PDU session ID in the PDU session ID IE; |
| | | b) | set the Payload container type IE to " CIoT user data container"; |
| | | c) | set the Payload container IE to the CIoT user data container which was not forwarded; |
| | | d) | set the 5GMM cause IE to the 5GMM cause #22 "Congestion", the 5GMM cause #67 "insufficient resources for specific slice and DNN" , the 5GMM cause #69 "insufficient resources for specific slice" or the 5GMM cause #xx "insufficient resources for LADN S-NSSAI and LADN DNN in the LADN service area", and include the Back-off timer value IE. |
| | | | 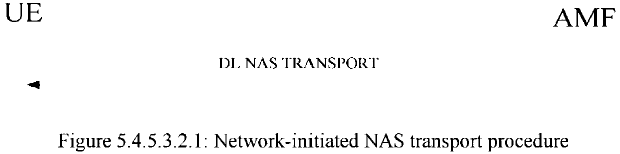 |

As shown in [Table 2], when transmitting a single UL 5GSM message or a single UL CIoT user data container that is not delivered due to congestion control, the AMF may configure a 5GMM reject cause indicating insufficient resources for the LADN S-NSSAI and LADN DNN within the LADN service area.

According to an embodiment, the contents in [Table 3] may be defined for a UL NAS transport message initiated by the network.

**[Table 3]**

| | | |
|---|---|---|
| 5.4.5.3.3 Network-initiated NAS transport of messages | | |
| Upon reception of a DL NAS TRANSPORT message, the UE shall stop the timer T3346 if running. | | |
| Upon reception of a DL NAS TRANSPORT message, if the Payload container type IE is set to: | | |
| | | ... |
| | | g) "N1 SM information" and: |
| | ... | |
| | 10) | the 5GMM cause IE is set to the 5GMM cause #xx "insufficient resources for LADN S-NSSAI and LADN DNN in the LADN service area", the UE passes to the 5GSM sublayer an indication that the 5GSM message was not forwarded due to S-NSSAI only based congestion control along with the 5GSM message from the Payload container IE of the DL NAS TRANSPORT message, and the time value from the Back-off timer value IE; |
| | | ... |
| | | 1) "CIoT user data container" and: |
| | ... | |
| 5) the 5GMM cause IE is set to the 5GMM cause #xx "insufficient resources for LADN S-NSSAI and LADN DNN in the LADN service area", the UE passes to the 5GSM sublayer an indication that the 5GSM message was not forwarded due to S-NSSAI only based congestion control along with the 5GSM message from the Payload container IE of the DL NAS TRANSPORT message, and the time value from the Back-off timer value IE; | | |

As shown in [Table 3], if a 5GMM reject cause indicating insufficient resources for the LADN S-NSSAI and LADN DNN is configured in the DL NAS transport message, the wireless device may transmit to the 5GSM sublayer, along with the 5GSM message included in the payload container IE of the DL NAS transport message, an indication that the 5GSM message was not delivered due to S-NSSAI-based congestion control, and a back-off timer time value.

According to an embodiment, the contents in [Table 4] may be defined for the processing of the LADN service area and LADN S-NSSAI and LADN-based congestion control.

**[Table 4]**

| | |
|---|---|
| 6.2.x Handling of LADN service area, corresponding LADN S-NSSAI and LADN DNN based congestion control | |
| The network may detect and start performing LADN service area, corresponding LADN S-NSSAI and LADN DNN based congestion control. | |
| In case of PLMN or SNPN, in the UE, 5GS session management timers T358x for the LADN service area, corresponding LADN S-NSSAI and LADN DNN based congestion control are started and stopped on a per their LADN service area, corresponding LADN S-NSSAI, LADN DNN and PLMN or SNPN basis. | |
| If T358x is running or is deactivated, then the UE is not allowed to initiate the: | |
| | a) PDU session establishment procedure; |
| | b) PDU session modification procedure; or |
| | c) NAS transport procedure for sending CIoT user data; |
| for the respective LADN service area, corresponding LADN S-NSSAI and LADN DNN unless the UE is a UE configured for high priority access in the LADN service area or SNPN or to report a change of 3GPP PS data off UE status. | |

As shown in [Table 4], if the 5GS session management timer (T358x) is running or disabled in the UE, the UE does not initiate the PDU session establishment procedure, the PDU session modification procedure, or the NAS transport procedure for transmitting CIoT user data.

According to an embodiment, the 5GS session management timer T358x may be defined as in [Table 5].

**[Table 5]**

| **TIMER NUM.** | **TIMER VALUE** | | **STATE** | **CAUSE OF START** | **NORMAL STOP** | **ON THE 1^{st}, 2^{nd}, 3^{rd}, 4^{th} EXPIRY (NOTE 1)** |
|---|---|---|---|---|---|---|
| T358x | NOTE 3 | | PDU SESSION ACTIVE PENDING PDU SESSION MODIFICATIO N PENDING PDU SESSION ACTIVE or PDU SESSION INACTIVE PENDING | PDU SESSION ESTABLISHMENT REJECT, PDU SESSION MODIFICATION REJECT, or PDU SESSION RELEASE COMMAND received with 5GSM cause #xx and with a timer value for T358x | PDU SESSION RELEASE COMMAND message (see NOTE 6) or PDU SESSION MODIFICATION COMMAND message or PDU SESSION AUTHENTICATION COMMAND message or DEREGISTRATION REQUEST message with the re-registration type "re-registration required" | None |
| | | | | PDU SESSION ESTABLISHMENT REQUEST, or PDU SESSION MODIFICATION REQUEST received in a DL NAS TRANSPORT message with 5GMM cause #xx and with a timer value for T358x(see subclause 5.4.5.3.3) | | |
| Back-off timer | | | | defined in 3GPP TS 24.008 [12] | | |
| NOTE 6: | | If the PDU SESSION RELEASE COMMAND message includes the Back-off timer value IE where the timer value indicates neither zero nor deactivated and the 5GSM cause is not #39, the UE then starts the timer with the value provided in the Back-off timer value IE after stopping the existing timer (see subclause 6.3.3.3). | | | | |

According to an embodiment, the contents in [Table 6] may be defined for network rejections not due to congestion control.

**[Table 6]**

| |
|---|
| 6.2.12 Handling of network rejection not due to congestion control |
| The network may include a back-off timer value in a 5GS session management reject message to regulate the time interval at which the UE may retry the same procedure for 5GSM cause values other than #26 "insufficient resources", #28 "unknown PDU session type", #39 "reactivation requested", #46 "out of LADN service area", #50 "PDU session type IPv4 only allowed", #51 "PDU session type IPv6 only allowed", #54 "PDU session does not exist", #57 "PDU session type IPv4v6 only allowed", #58 "PDU session type Unstructured only allowed", #61 "PDU session type Ethernet only allowed", #67 "insufficient resources for specific slice and DNN", #68 "not supported SSC mode", #69 "insufficient resources for specific slice" and #xx "insufficient resources for LADN S-NSSAI and LADN DNN in the LADN service area". For 5GSM cause values other than #26 "insufficient resources", #28 "unknown PDU session type", #39 "reactivation requested", #46 "out of LADN service area", #54 "PDU session does not exist", #67 "insufficient resources for specific slice and DNN", #68 "not supported SSC mode", #69 "insufficient resources for specific slice", #86 "UAS services not allowed" and #xx "insufficient resources for LADN S-NSSAI and LADN DNN in the LADN service area", the network may also include the re-attempt indicator to indicate whether the UE is allowed to re-attempt the corresponding session management procedure for the same DNN in S1 mode after inter-system change. |

According to an embodiment, the contents in [Table 7] may be defined for PDU session release procedures requested by the network.

**[Table 7]**

| | |
|---|---|
| 6.3.3.2 Network-requested PDU session release procedure initiation | |
| In order to initiate the network-requested PDU session release procedure, the SMF shall create a PDU SESSION RELEASE COMMAND message. | |
| The SMF shall set the 5GSM cause IE of the PDU SESSION RELEASE COMMAND message to indicate the reason for releasing the PDU session. | |
| The 5GSM cause IE typically indicates one of the following 5GSM cause values: | |
| | ... |
| | #xx insufficient resources for LADN S-NSSAI and LADN DNN in the LADN service area. |
| ... | |
| The SMF may include a Back-off timer value IE in the PDU SESSION RELEASE COMMAND message when the 5GSM cause #xx "insufficient resources for LADN S-NSSAI and LADN DNN in the LADN service area" is included in the PDU SESSION RELEASE COMMAND message. If the 5GSM cause value is #xx "insufficient resources for LADN S-NSSAI and LADN DNN in the LADN service area" and the PDU SESSION RELEASE COMMAND message is sent to a UE configured for high priority access in selected PLMN of the LADN service area or SNPN of the LADN service area or the request type was set to "initial emergency request" or "existing emergency PDU session" for the establishment of the PDU session, the network shall not include a Back-off timer value IE. | |

As shown in [Table 7], the PDU Session Release Command message may include a reject cause indicating insufficient resources for the LADN S-NSSAI and LADN DNN within the LADN service area, as well as a back-off timer value. However, if the PDU Session Release Command message is sent to a wireless device configured for high-priority access in a selected PLMN or SNPN within the LADN service area, the PDU Session Release Command message does not include a back-off timer value for PDU session establishment.

According to an embodiment, the contents in [Table 8] may be defined for the PDU Session Release procedure accepted by the wireless device.

**[Table 8]**

| | |
|---|---|
| 6.3.3.3 Network-requested PDU session release procedure accepted by the UE | |
| If the 5GSM cause value is #xx "insufficient resources for LADN S-NSSAI and LADN DNN in the LADN service area" and the Back-off timer value IE is not included, then the UE may send another PDU SESSION ESTABLISHMENT REQUEST message or PDU SESSION MODIFICATION REQUEST message for the same [S-NSSAI, DNN] combination in the same LADN service area. When the timer T358x is running or the timer is deactivated, the UE is allowed to initiate a PDU session establishment procedure for emergency services. | |
| If the timer T358x is running when the UE enters state 5GMM-DEREGISTERED, the UE remains switched on, and the USIM in the UE (if any) remains the same and the entry in the "list of subscriber data" for the SNPN to which timer T358x is associated (if any) is not updated, then timer T358x is kept running until it expires or it is stopped. | |
| If the UE is switched off when the timer T358x is running, and if the USIM in the UE (if any) remains the same and the entry in the "list of subscriber data" for the SNPN to which timer T358x is associated (if any) is not updated when the UE is switched on, the UE shall behave as follows: | |
| - | let t1 be the time remaining for T358x timeout at switch off and let t be the time elapsed between switch off and switch on. If t1 is greater than t, then the timer shall be restarted with the value t1 - t. If t1 is equal to or less than t, then the timer need not be restarted. If the UE is not capable of determining t, then the UE shall restart the timer with the value t1. |
| The UE shall transport the PDU SESSION RELEASE COMPLETE message and the PDU session ID, using the NAS transport procedure as specified in subclause 5.4.5. | |
| Upon receipt of a PDU SESSION RELEASE COMPLETE message, the SMF shall stop timer T3592 and shall consider the PDU session as released. | |

As shown in [Table 8], if the PDU Session Release Command message includes a 5GSM reject cause indicating insufficient resources for the LADN S-NSSAI and LADN DNN within the LADN service area and does not include a back-off timer value, the wireless device may transmit another PDU Session Establishment Request message or PDU Session Modification Request message for the same S-NSSAI and DNN combination within the same LADN service area. Furthermore, if the 5GS session management timer, T358x, is running or disabled, the wireless device may initiate a PDU session establishment procedure for emergency services.

According to an embodiment, the contents in [Table 9] may be defined for the PDU session establishment reject message of the SMF.

**[Table 9]**

| | |
|---|---|
| 6.4.1.4.1 General | |
| If the connectivity with the requested DN is rejected by the network, the SMF shall create a PDU SESSION ESTABLISHMENT REJECT message. | |
| The SMF shall set the 5GSM cause IE of the PDU SESSION ESTABLISHMENT REJECT message to indicate the reason for rejecting the PDU session establishment. | |
| The 5GSM cause IE typically indicates one of the following SM cause values: | |
| | ... |
| | #xx insufficient resources for LADN S-NSSAI and LADN DNN in the LADN service area; or#9x - 111 protocol errors. |
| ... | |
| The network may include a Back-off timer value IE in the PDU SESSION ESTABLISHMENT REJECT message. | |
| If the 5GSM cause value is #26 "insufficient resources", #67 "insufficient resources for specific slice and DNN", #69 "insufficient resources for specific slice" or #xx "insufficient resources for LADN S-NSSAI and LADN DNN in the LADN service area" and the PDU SESSION ESTABLISHMENT REQUEST message was received from a UE configured for high priority access in selected PLMN or SNPN or the request type provided during the PDU session establishment is set to "initial emergency request" or "existing emergency PDU session", the network shall not include a Back-off timer value IE. If the 5GSM cause value is #29 "user authentication or authorization failed ", the network should include a Back-off timer value IE. | |
| If the Back-off timer value IE is included and the 5GSM cause value is different from #26 "insufficient resources", #28 "unknown PDU session type", #46 "out of LADN service area", #50 "PDU session type IPv4 only allowed", #51 "PDU session type IPv6 only allowed", #54 "PDU session does not exist", #57 "PDU session type IPv4v6 only allowed", #58 "PDU session type Unstructured only allowed", #61 "PDU session type Ethernet only allowed", #67 "insufficient resources for specific slice and DNN", #68 "not supported SSC mode", #69 "insufficient resources for specific slice" and #xx "insufficient resources for LADN S-NSSAI and LADN DNN in the LADN service area", the network may include the Re-attempt indicator IE to indicate whether the UE is allowed to attempt a PDN connectivity procedure in the PLMN for the same DNN in S1 mode, whether another attempt in S1 mode or in N1 mode is allowed in an equivalent PLMN or whether another attempt in N1 mode is allowed in an equivalent SNPN. | |
| If the 5GSM cause value is #50 "PDU session type IPv4 only allowed", #51 "PDU session type IPv6 only allowed", #57 "PDU session type IPv4v6 only allowed", #58 "PDU session type Unstructured only allowed", or #61 "PDU session type Ethernet only allowed", the network may include the Re-attempt indicator IE without Back-off timer value IE to indicate whether the UE is allowed to attempt a PDU session establishment procedure in an equivalent PLMN or equivalent SNPN in N1 mode using the same PDU session type for the same DNN (or no DNN, if no DNN was indicated by the UE) and the same S-NSSAI (or no S-NSSAI, if no S-NSSAI was indicated by the UE). | |
| The SMF shall send the PDU SESSION ESTABLISHMENT REJECT message. | |
| Upon receipt of a PDU SESSION ESTABLISHMENT REJECT message and a PDU session ID, using the NAS transport procedure as specified in subclause 5.4.5, the UE shall stop timer T3580 shall release the allocated PTI value and shall consider that the PDU session was not established. | |
| | ... |
| If the 5GSM cause value is different from #26 "insufficient resources", #28 "unknown PDU session type", #39 "reactivation requested", #46 "out of LADN service area", #50 "PDU session type IPv4 only allowed", #51 "PDU session type IPv6 only allowed", #54 "PDU session does not exist", #57 "PDU session type IPv4v6 only allowed", #58 "PDU session type Unstructured only allowed", #61 "PDU session type Ethernet only allowed", #67 "insufficient resources for specific slice and DNN", #68 "not supported SSC mode", #69 "insufficient resources for specific slice", #86 "UAS services not allowed", #33 "requested service option not subscribed" and #xx "insufficient resources for LADN S-NSSAI and LADN DNN in the LADN service area" and the PDU SESSION ESTABLISHMENT REQUEST message was received from a UE configured for high priority access in selected PLMN, the network shall not include a Back-off timer value IE. | |

As shown in [Table 9], if a connection to the requested DN is rejected by the network, the PDU Session Establishment Reject message may include a 5GSM reject cause indicating insufficient resources for the LADN S-NSSAI and LADN DNN within the LADN service area and a back-off timer value.

According to an embodiment, the contents in [Table 10] may be defined for handling network rejection due to congestion control.

**[Table 10]**

| | | |
|---|---|---|
| 6.4.2.4.2 Handling of network rejection due to congestion control | | |
| | | |
| If: | | |
| | - the 5GSM cause value #xx "insufficient resources for LADN S-NSSAI and LADN DNN in the LADN service area" and the Back-off timer value IE are included in the PDU SESSION MODIFICATION REJECT message; or | |
| | - an indication that the 5GSM message was not forwarded due to LADN service area, corresponding LADN S-NSSAI and LADN DNN based congestion control is received along a Back-off timer value and a PDU SESSION MODIFICATION REQUEST message with the PDU session ID IE set to the PDU session ID of the PDU session; | |
| the UE shall ignore Re-attempt indicator IE provided by the network, if any, and take different actions depending on the timer value received for timer T358x in the Back-off timer value IE or depending on the Back-off timer value received from the 5GMM sublayer (if the UE is a UE configured for high priority access in selected PLMN of the LADN service area or SNPN of the LADN service area, exceptions are specified in subclause 6.2.x): | | |
| | a) If the timer value indicates neither zero nor deactivated and an S-NSSAI and a DNN was provided during the PDU session establishment and the request type was different from "initial emergency request" and different from "existing emergency PDU session", the UE shall stop timer T358x associated with the S-NSSAI of the PDU session for LADN service area, if it is running. If the timer value indicates neither zero nor deactivated and no S-NSSAI was provided during the PDU session establishment and the request type was different from "initial emergency request" and different from "existing emergency PDU session", the UE shall stop timer T358x associated with no S-NSSAI if it is running. The timer T358x to be stopped includes: | |
| | | - the timer T358x applied for the LADN service area for the S-NSSAI and DNN which the PDU SESSION MODIFICATION REJECT is received, if running; |
| | | The UE shall then start timer T358x with the value provided in the Back-off timer value IE or with the Back-off timer value received from the 5GMM sublayer and: |
| | | 1) if an LADN S-NSSAI and the LADN DNN were provided by the UE during the PDU session establishment, the UE shall not send another PDU SESSION ESTABLISHMENT REQUEST message with request type different from "initial emergency request" and different from "existing emergency PDU session", or another PDU SESSION MODIFICATION REQUEST message with exception of those identified in subclause 6.4.2.1, for a non-emergency PDU session for the S-NSSAI of the PDU session for LADN service area, until timer T358x expires or timer T358x is stopped; and |
| | b) if the timer value indicates that this timer is deactivated and an S-NSSAI and a DNN were provided during the PDU session establishment and the request type was different from "initial emergency request" and different from "existing emergency PDU session", the UE shall stop timer T358x associated with the S-NSSAI of the PDU session for the LADN DNN, if it is running. If the timer value indicates that this timer is deactivated and no S-NSSAI was provided during the PDU session establishment and the request type was different from "initial emergency request" and different from "existing emergency PDU session", the UE shall stop timer T358x associated with no S-NSSAI if it is running. The timer T358x to be stopped includes: | |
| | | - the timer T358x applied for the LADN service area for the S-NSSAI and a DNN which the PDU SESSION MODIFICATION REJECT is received, if running; In addition: |
| | | 1) if an S-NSSAI and a DNN was provided by the UE during the PDU session establishment, the UE shall not send another PDU SESSION ESTABLISHMENT REQUEST message with request type different from "initial emergency request" and different from "existing emergency PDU session", or another PDU SESSION MODIFICATION REQUEST with exception of those identified in subclause 6.4.2.1, for a non-emergency PDU session for the S-NSSAI of the PDU session until the UE is switched off, the USIM is removed, the entry in the "list of subscriber data" for the current SNPN is updated, or the UE receives a PDU SESSION MODIFICATION COMMAND message for a non-emergency PDU session for the S-NSSAI of the PDU session from the network, or a PDU SESSION AUTHENTICATION COMMAND message for a non-emergency PDU session for the S-NSSAI of the PDU session from the network, or a PDU SESSION RELEASE COMMAND message without the Back-off timer value IE for the S-NSSAI of the PDU session from the network; and |
| | | 2) if the request type was different from "initial emergency request" and from "existing emergency PDU session", and an S-NSSAI was not provided by the UE during the PDU session establishment, the UE shall not send another PDU SESSION ESTABLISHMENT REQUEST message without an S-NSSAI and with request type different from "initial emergency request" and different from "existing emergency PDU session", or another PDU SESSION MODIFICATION REQUEST message with exception of those identified in subclause 6.4.2.1, for a non-emergency PDU session established without an S-NSSAI provided by the UE, until the UE is switched off, the USIM is removed, the entry in the "list of subscriber data" for the current SNPN is updated, or the UE receives a PDU SESSION MODIFICATION COMMAND message for a non-emergency PDU session established without an S-NSSAI provided by the UE, or a PDU SESSION AUTHENTICATION COMMAND message for a non-emergency PDU session established without an S-NSSAI provided by the UE, or a PDU SESSION RELEASE COMMAND message without the Back-off timer value IE for a non-emergency PDU session established without an S-NSSAI provided by the UE. |
| | | The timer T3585 remains deactivated upon a PLMN change or inter-system change; and |
| c) if the timer value indicates zero: | | |
| | | 1) if an S-NSSAI and a DNN was provided by the UE during the PDU session establishment, the UE shall stop timer T358x associated with the S-NSSAI of the PDU session (including the timer T358x applied for all the PLMNs, if running, and the timer T358x applied for the registered PLMN, if running), if running, and may send another PDU SESSION ESTABLISHMENT REQUEST message or PDU SESSION MODIFICATION REQUEST message for the S-NSSAI of the PDU session; and |
| | | 2) if no S-NSSAI a DNN was provided during the PDU session establishment and the request type was different from "initial emergency request " and different from "existing emergency PDU session", the UE shall stop timer T358x associated with no S-NSSAI (including the timer T358x applied for all the PLMNs, if running, and the timer T358x applied for the registered PLMN, if running), if running, and may send another PDU SESSION ESTABLISHMENT REQUEST message without an S-NSSAI, or another PDU SESSION MODIFIC |
| | | ATION REQUEST message without an S-NSSAI provided by the UE. |
| When the timer T358x is running or the timer is deactivated, the UE is allowed to initiate a PDU session establishment procedure for emergency services. | | |
| If the timer T358x is running when the UE enters state 5GMM-DEREGISTERED, the UE remains switched on, and the USIM in the UE (if any) remains the same and the entry in the "list of subscriber data" for the SNPN to which timer T358x is associated (if any) is not updated, then timer T358x is kept running until it expires or it is stopped. | | |
| If the UE is switched off when the timer T358x is running, and if the USIM in the UE (if any) remains the same and the entry in the "list of subscriber data" for the SNPN to which timer T358x is associated (if any) is not updated when the UE is switched on, the UE shall behave as follows: | | |
| - let t1 be the time remaining for T358x timeout at switch off and let t be the time elapsed between switch off and switch on. If t1 is greater than t, then the timer shall be restarted with the value t1 - t. If t1 is equal to or less than t, then the timer need not be restarted. If the UE is not capable of determining t, then the UE shall restart the timer with the value t1. | | |

As shown in [Table 10], if a PDU Session Modification Reject message including a 5GSM reject cause and a back-off timer is received, or if an indication indicating that a 5GSM message was not delivered due to a LADN service area is received along with a back-off timer and a PDU Session Modification Request message, the wireless device should ignore the retry indicator provided by the network and perform an operation based on the back-off timer. Specifically, the wireless device may control the timer T358x associated with the S-NSSAI of the PDU session for the LADN service area or the timer T358x associated with the S-NSSAI of the PDU session for the LADN DNN based on at least one of the timer value, the S-NSSAI and DNN provided during the PDU session, or the request type, or may control not to transmit a PDU Session Establishment Request message or a PDU Session Modification Request message.

According to an embodiment, the contents in [Table 11] may be defined for handling network rejection due to congestion control.

**[Table 11]**

| |
|---|
| 6.4.2.4.3 Handling of network rejection not due to congestion control |
| If the 5GSM cause value is different from #26 "insufficient resources", #37 "5GS QoS not accepted", #44 "Semantic errors in packet filter(s)", #45 "Syntactical error in packet filter(s)", #46 "out of LADN service area", #59 "unsupported 5QI value", #67 "insufficient resources for specific slice and DNN", #69 "insufficient resources for specific slice", #83 "Semantic error in the QoS operation", #84 "Syntactical error in the QoS operation" and #xx "insufficient resources for LADN S-NSSAI and LADN DNN in the LADN service area", and the Back-off timer value IE is included, the UE shall behave as follows: (if the UE is a UE configured for high priority access in selected PLMN or SNPN, exceptions are specified in subclause 6.2.12): |

According to an embodiment, PDU session-related messages may be defined as shown in [Table 12].

**[Table 12]**

| |
|---|
| 8.3.3 PDU session establishment reject |
| 8.3.3.6 Re-attempt indicator |
| The network may include this IE if the network includes the Back-off timer value IE and the 5GSM cause value is not #26 "insufficient resources", #28 "unknown PDU session type", #39 "reactivation requested", #46 "out of LADN service area", #54 "PDU session does not exist", #67 "insufficient resources for specific slice and DNN", #68 "not supported SSC mode", #69 "insufficient resources for specific slice" or #xx "insufficient resources for LADN S-NSSAI and LADN DNN in the LADN service area". |
| 8.3.8 PDU session modification reject |
| 8.3.8.2 Back-off timer value |
| The network may include this IE if the 5GSM cause is not #26 "insufficient resources", #37 "5GS QoS not accepted", #44 "Semantic errors in packet filter(s)", #45 "Syntactical error in packet filter(s)", #46 "out of LADN service area", #59 "unsupported 5QI value", #67 "insufficient resources for specific slice and DNN", #69 "insufficient resources for specific slice", #83 "Semantic error in the QoS operation", #84 "Syntactical error in the QoS operation" or #xx "insufficient resources for LADN S-NSSAI and LADN DNN in the LADN service area" to request a minimum time interval before procedure retry is allowed. |
| 8.3.8.4 Re-attempt indicator |
| The network may include this IE only if it includes the Back-off timer value IE and the 5GSM cause value is not #26 "insufficient resources", #37 "5GS QoS not accepted", #44 "Semantic errors in packet filter(s)", #45 "Syntactical error in packet filter(s)", #46 "out of LADN service area", #59 "unsupported 5QI value", #67 "insufficient resources for specific slice and DNN", #69 "insufficient resources for specific slice", #83 "Semantic error in the QoS operation", #84 "Syntactical error in the QoS operation" or #xx "insufficient resources for LADN S-NSSAI and LADN DNN in the LADN service area". |
| 8.3.14 PDU session release command |
| 8.3.14.55GSM congestion re-attempt indicator |
| The network may include this IE only if it includes the Back-off timer value IE and the 5GSM cause value is either #67 "insufficient resources for specific slice and DNN", #69 "insufficient resources for specific slice" or #xx "insufficient resources for LADN S-NSSAI and LADN DNN in the LADN service area". |

As shown in [Table 12], the PDU Session Establishment Reject message, the PDU Session Modification Reject message, and/or the PDU Session Release Command message may include at least one of a back-off timer value or a retry indicator, based on whether the 5GSM reject cause indicates insufficient resources for the LADN S-NSSAI and LADN DNN within the LADN service area.

According to an embodiment, causes related to PLMN or SNPN-specific network failures and congestion/authentication failures may be defined as shown in [Table 13].

**[Table 13]**

| | |
|---|---|
| A.3 Causes related to PLMN or SNPN specific network failures and congestion/authentication failures | |
| ... | |
| Cause #xx - Insufficient resources for LADN S-NSSAI and LADN DNN in the LADN service area | |
| | This 5GSM cause is by the network to indicate that the requested service cannot be provided due to insufficient resources for LADN S-NSSAI and LADN DNN in the LADN service area. |
| B.1 Causes related to nature of request | |
| ... | |
| Cause #xx - Insufficient resources for LADN S-NSSAI and LADN DNN in the LADN service area | |
| This 5GSM cause is by the network to indicate that the requested service cannot be provided due to insufficient resources for LADN S-NSSAI and LADN DNN in the LADN service area. | |

Examples of the proposed methods described above can also be included as one of the implementation methods of the present disclosure, so it is clear that they can be considered as types of proposed methods. In addition, the proposed methods described above may be implemented independently, but may also be implemented in the form of a combination (or merger) of some proposed methods. Rules may be defined so that information on whether the proposed methods are applied (or information on the rules of the proposed methods) is notified by the base station to the terminal through a predefined signal (e.g., physical layer signal or higher layer signal).

The present disclosure may be embodied in other specific forms without departing from the technical ideas and essential features described in the present disclosure. Therefore, the above detailed description should not be interpreted as restrictive in all aspects but should be considered as illustrative. The scope of the present disclosure should be determined by reasonable interpretation of the appended claims, and all changes within the equivalent scope of the present disclosure are included in the scope of the present disclosure. In addition, claims that do not have explicit citation relationships in the claims may be combined to form embodiments or may be included as new claims by amendments after filing.

### INDUSTRIAL APPLICABILITY

The embodiments of the present disclosure can be applied to various wireless access systems. Examples of various wireless access systems include 3rd Generation Partnership Project (3GPP) or 3GPP2 systems.

The embodiments of the present disclosure can be applied not only to the various wireless access systems described above, but also to all technical fields that apply the various wireless access systems. Furthermore, the proposed method can also be applied to mmWave and THz communication systems that use ultra-high frequency bands.

Additionally, the embodiments of the present disclosure can also be applied to various applications such as autonomous vehicles and drones.

## Claims

1. A method performed by a network in a wireless communication system, the method comprising:
activating a congestion control function;
receiving a request message from a wireless device; and
transmitting a message including a reject cause for the request message to the wireless device,
wherein the reject cause indicates insufficient resources for a local area data network (LADN) single network slice selection assistance information (S-NSSAI) and an LADN data network name (DNN) within an LADN service area.

2. The method of claim 1, wherein the message including the reject cause further includes a back-off timer value that prevents a retransmission of the request message for a period of time.

3. The method of claim 2, wherein, based on the request message being a message related to emergency services, the message including the reject cause does not include the back-off timer value.

4. The method of claim 1, wherein the congestion control function is a function for controlling network congestion based on the LADN service area.

5. The method of claim 1, wherein the congestion control function is activated based on resources for the LADN S-NSSAI and the LADN DNN within the LADN service area.

6. The method of claim 1, wherein the congestion control function is activated based on at least one of the number of wireless devices connected to the LADN service area, the maximum number of wireless devices capable of connecting to the LADN service area, or the number of wireless devices requesting connection to the LADN service area.

7. The method of claim 1, wherein the congestion control function is activated based on a request from at least one other network entity.

8. The method of claim 1, wherein the network includes at least one of an access and mobility management function (AMF) or a session management function (SMF).

9. The method of claim 1, wherein the AMF does not forward a PDU session-related message included in the request message to the SMF based on the request message being received while the congestion control function is activated.

10. The method of claim 1, wherein the request message includes at least one of a PDU session establishment request message, a PDU session modification request message, or a UL NAS transport message related to a PDU session.

11. The method of claim 1, wherein the message including the reject cause includes at least one of a PDU session release command message, a PDU session establishment reject message, a PDU session modification reject message, or a DL NAS transport message related to a PDU session.

12. A method performed by a wireless device in a wireless communication system, the method comprising:
transmitting a request message to a network;
receiving a message including a reject cause for the request message from the network; and
controlling a retransmission of the request message based on whether the message including the reject cause includes a back-off timer value,
wherein the reject cause indicates insufficient resources for a local area data network (LADN) single network slice selection assistance information (S-NSSAI) and an LADN DNN within an LADN service area.

13. The method of claim 12, wherein controlling the retransmission of the request message comprises:
preventing the retransmission from the request message for a period of time corresponding to the back-off timer value, based on the message including the reject cause including the back-off timer value; and
retransmitting the request message, based on the message including the reject cause including the back-off timer value.

14. A network device in a wireless communication system, the network device comprising:
a transceiver; and
a processor connected to the transceiver,
wherein the processor controls to:
activate a congestion control function;
receive a request message from a wireless device; and
transmit a message including a reject cause for the request message to the wireless device, and
wherein the reject cause indicates insufficient resources for a local area data network (LADN) single network slice selection assistance information (S-NSSAI) and an LADN DNN within an LADN service area.

15. A wireless device in a wireless communication system, the wireless device comprising:
a transceiver; and
a processor connected to the transceiver,
wherein the processor controls to:
transmit a request message to a network;
receive a message including a reject cause for the request message from the network; and
control a retransmission of the request message based on whether the message including the reject cause includes a back-off timer value, and
wherein the reject cause indicates insufficient resources for a local area data network (LADN) single network slice selection assistance information (S-NSSAI) and an LADN DNN within an LADN service area.

16. A communication device comprising:
at least one processor; and
at least one computer memory connected to the at least one processor and storing instructions that, based on being executed by the at least one processor, perform operations comprising:
transmitting a request message to a network;
receiving a message including a reject cause for the request message from the network; and
controlling a retransmission of the request message based on whether the message including the reject cause includes a back-off timer value,
wherein the reject cause indicates insufficient resources for a local area data network (LADN) single network slice selection assistance information (S-NSSAI) and an LADN DNN within an LADN service area.

17. A non-transitory computer-readable medium storing at least one instruction,
wherein the non-transitory computer-readable medium comprises the at least one instruction executable by a processor,
wherein the at least one instruction cause a device to:
transmit a request message to a network;
receive a message including a reject cause for the request message from the network; and
control a retransmission of the request message based on whether the message including the reject cause includes a back-off timer value, and
wherein the reject cause indicates insufficient resources for a local area data network (LADN) single network slice selection assistance information (S-NSSAI) and an LADN DNN within an LADN service area.
